# EUROPÄISCHE PATENTSCHRIFT

(11) **EP 1 344 692 B1**
(45) Veröffentlichungstag und Bekanntmachung des Hinweises auf die Patenterteilung: **15.12.2004**
(21) Anmeldenummer: 03005567.7
(22) Anmeldetag: 12.03.2003
(51) Int. Cl.: B60R 21/13

(54) **Überrollschutzsystem für Kraftfahrzeuge**
Roll over protection device for vehicles
Dispositif de protection contre le retournement pour véhicules

(30) Priorität: 13.03.2002 DE 10210957
(43) Veröffentlichungstag der Anmeldung: 17.09.2003
(73) Patentinhaber: ISE Innomotive Systems Europe GmbH, 51702 Bergneustadt (DE)
(72) Erfinder: Benz, Jörg, 51588 Nümbrecht (DE); Krumme, Klaus, 51702 Bergneustadt (DE); Nowack, Reinhard, 57489 Drolshagen (DE)
(74) Vertreter: Fuchs Mehler Weiss & Fritzsche

(56) Entgegenhaltungen:
- EP-A- 0 504 482
- EP-A- 0 965 470
- EP-A- 1 288 079
- US-A- 5 110 185

## Beschreibung

Die Erfindung bezieht sich auf ein Überrollschutzsystem für Kraftfahrzeuge, mit einem Überrollbügel, der in einer fahrzeugfesten Führungseinheit geführt aufgenommen ist, und der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine obere, schützende verriegelte Stellung bringbar ist, und der aus zwei geführten Schenkelrohren besteht, die am oberen Ende über einen Bügelkopf miteinander verbunden sind.

Derartige Überrollschutzsysteme dienen zum Schutz der Insassen in Kraftfahrzeugen ohne schützendes Dach, typischerweise in Cabriolets oder Sportwagen.

Es ist dabei bekannt, einen die gesamte Fahrzeugbreite überspannenden, fest installierten Überrollbügel vorzusehen oder jedem Fahrzeugsitz einen höhenunveränderlich fest installierten Überrollbügel zuzuordnen. Bei beiden Lösungen wird der erhöhte Luftwiderstand und das Auftreten von Fahrgeräuschen als nachteilig empfunden, abgesehen von der Beeinträchtigung des Fahrzeugaussehens bei Cabriolets.

Am Markt setzen sich daher immer mehr konstruktive Lösungen durch, bei denen der Überrollbügel im Normalzustand eingefahren ist, und im Gefahrenfall, also bei einem drohenden Überschlag, schnell in eine schützende Position ausgefahren wird, um zu verhindern, daß die Fahrzeuginsassen durch das sich überschlagende Fahrzeug erdrückt werden.

Diese Lösungen weisen typischerweise für jeden Sitz einen in einem fahrzeugfesten Kassetten-Gehäuse geführten U-förmigen oder aus einem Profilkörper gebildeten Überrollbügel, auf, der im Normalzustand gegen die Vorspannkraft einer Antriebs-Druckfeder durch eine Haltevorrichtung in einer unteren Ruhelage gehalten wird, und im Überschlagfall sensorgesteuert unter Lösen der Haltevorrichtung, durch die Federkraft in eine obere, schützende Stellung bringbar ist, wobei eine dann in Wirkeingriff tretende Verriegelungseinrichtung ein Eindrücken des Überrollbügels in die Kassette verhindert.

Die Haltevorrichtung besitzt dabei typischerweise ein am Überrollkörper befestigtes Halteglied, das in lösbarer mechanischer Wirkverbindung mit einem Auslöseglied an einem sensorgesteuerten Auslösesystem steht, das typischerweise durch einen Auslösemagneten, den sogenannten Crashmagneten, oder durch ein pyrotechnisches Auslöseglied, gebildet ist.

Die Verriegelungseinrichtung besteht typischerweise aus einer schwenkbar angelenkten, federvorgespannten Rastklinke mit Zahnsegmenten und einer feststehenden Zahnleiste, einem Rastdorn oder dergleichen, wobei ein Verriegelungs-Element mit dem Überrollbügel und das andere fahrzeugfest verbunden ist.

Eine derartige Kassetten-Konstruktion eines Überrollbügelschutzsystems zeigt beispielsweise die DE 100 40 649 C1.

Neben einer guten Führung des Überrollbügels, welche die bei einem Überschlag auftretenden Kräfte aufzunehmen in der Lage ist, kommt es in Bezug auf die Sicherheit des Überrollbügelsystems auch auf die konstruktive Gestaltung des Überrollbügels selbst an.

Bei den bekannten Kassettensystemen besteht der Überrollbügel typischerweise aus zwei, die Schenkel des Bügels bildenden metallischen Rohren, vorzugsweise aus Stahl oder Leichtmetall, die über ein rohrförmiges Querjoch, den Bügelkopf, miteinander mechanisch verbunden sind, indem der Bügelkopf typischerweise mit den Schenkelrohren verschweißt ist. Dieses Querjoch weist an beiden Enden eine 90°-Abbiegung zur Verbindung mit den Schenkel-Rohren auf, d.h. erstreckt sich nur innerhalb der Bügelbreite. Die Abstützfläche, mit der sich der ausgefahrene Überrollbügel im Überschlagfall auf den Untergrund abstützt, ist daher auf die Bügelbreite begrenzt. Dadurch wirken die bei einem Überschlag auf das System einwirkenden Kräfte innerhalb einer begrenzten Fläche auf den Überrollbügel ein, d.h. der Bügelkopf wird kräftemäßig spezifisch stark beansprucht und muß entsprechend verstärkt ausgebildet sein.

Der Erfindung liegt die Aufgabe zugrunde, ausgehend von dem eingangs bezeichneten Überrollschutzsystem dieses hinsichtlich des Überrollbügels so auszubilden, daß dieser die bei einem Überschlag auf ihn einwirkenden Kräfte mechanisch günstiger aufzunehmen in der Lage ist.

Die Lösung dieser Aufgabe gelingt bei einem Überrollschutzsystem für Kraftfahrzeuge, mit einem Überrollbügel, der in einer fahrzeugfesten Führungseinheit geführt aufgenommen ist, und der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine obere, schützende verriegelte Stellung bringbar ist, und der aus zwei geführten Schenkelrohren besteht, die am oberen Ende über einen Bügelkopf miteinander verbunden sind, gemäß der Erfindung dadurch, daß der Bügelkopf zusätzlich zu der von einem die Schenkelrohre verbindenden Formkörper vorgegebenen Stützfläche eine weitere Stützfläche aufweist, die durch mindestens einen integralen Fortsatz an dem die Schenkelrohre verbindenden Formkörper des Bügelkopfes in der Bügelebene gebildet ist.

Durch die Erfindung wird eine Bügelkopfform erreicht, die ein breiteres Stützprofil als bei herkömmlichen Überrollschutzsystemen ermöglicht. Durch das verbreiterte Stützprofil wird eine Vergrößerung der Abstützfläche des Überrollschutzsystems erreicht.

Dadurch ergibt sich mit Vorteil, daß sich ein Teil der bei einem Überschlag auf das System einwirkenden Kräfte auf eine größere Fläche verteilt, d.h. die spezifische Belastung sinkt. Als Folge davon wird die Abstützwirkung des Systems erhöht und damit der Insassenschutz verbessert.

Die Breite und die Form des zusätzlichen Stützprofils ist variabel und u.a. abhängig von der Breite des Fahrzeugs.

Ein derartiger Bügelkopf mit integral verbreiteter Stützfläche läßt sich fertigungstechnisch einfacher herstellen und ist auch einfacher montierbar.

Bei dem Gegenstand der Erfindung geht es daher um die Vergrößerung der Stützfläche, über die das Fahrzeug im Überschlagfall abrollt. Bei allen bekannten Überrollsystemen steht bestimmungsgemäß als Stützfläche allein der Formkörper zwischen den beiden Schenkelrohren des Überrollbügels, der sogenannte Bügelkopf, zur Verfügung.

Der erfindungsgemäß vorgesehene integrale Fortsatz vergrößert die Stützfläche. Dadurch wird mit Vorteil erreicht, daß sich ein Teil der bei einem Überschlag auf das System einwirkenden Kräfte auf eine größere Fläche verteilt, wodurch die Abstützwirkung des Systems erhöht und damit der Insassenschutz verbessert wird, insbesondere beim Aufschlag auf weichem Untergrund.

Ein bekannter und gattungsbildender Überrollbügel nach der DE 41 08 878 A1 besitzt war seitliche Fortsätze, weist jedoch keine gegenüber dem Bügelkopf erweiterte Stützfläche auf. Die seitlichen, herabhängenden und nicht näher bezeichneten Fortsätze liegen unterhalb der sogenannten Überrolltangente, d.h. liefern keinen Beitrag zu einer Stützfläche. Sie haben neben einer optischen Funktion die Aufgabe der Verbesserung des seitlichen Kopfaufprallschutzes, da im bekannten Fall der Bügelkopf auch als Kopfstütze ausgebildet ist.

Gemäß einer Ausgestaltung der Erfindung weist der die Schenkelrohre verbindende Formkörper typischerweise nur einen in das Fahrzeuginnere gerichteten Fortsatz auf. Es kann aber auch an der anderen Kopfseite ein weiterer Fortsatz ausgebildet sein.

Eine günstige, verbreiterte Stützfläche läßt sich gemäß einer Weiterbildung der Erfindung erzielen, wenn der integrale Fortzsatz langhornartig, vorzuweise bündig mit dem Profil des die Schenkelrohre verbindenden Formkörpers, ausgebildet ist. Bei einer derartigen Ausbildung stellt sich eine sehr gleichmäßige Verteilung der Stützkräfte bei einem Überschlag ein.

Eine weitere Erhöhung der Abstützwirkung des Systems läßt sich durch eine andere Weiterbildung der Erfindung erzielen, wenn der integrale Fortsatz sich parallel zur Bügelebene zum Fahrzeuginneren hin erstreckt, und insbesondere der integrale Fortsatz eine derartige Länge aufweist, daß sich zwischen seiner Stirnseite und der des Fortsatzes des Bügelkopfes des benachbarten Fahrzeugsitzes nur ein sehr schmaler Zwischenraum ergibt. Dadurch können sich die Überrollbügel der Überrollschutzsysteme, die typischerweise paarig im Fahrzeug verbaut werden, über die Fortsätze der Bügelköpfe beim Einwirken seitlicher Kräfte gegenseitig abstützen. Die Schutzwirkung läßt sich-dadurch noch weiter erhöhen.

Bei dieser paarweisen Anordnung von Überrollbügeln mit langgezogenen Fortsätzen können mit Vorteil auch Längskräfte auf beide Systeme verteilt werden, wenn gemäß einer Weiterbildung der Erfindung die beiden integralen Fortsätze an ihren zur Fahrzeugmitte weisenden Stirnflächen zueinander komplementäre Ausformungen für eine gegenseitige Verzahnung bilden.

Um den Bügelkopf mit verbreiterter Stützfläche herzustellen, stehen dem Fachmann eine Reihe von Umform-Verfahren zur Verfügung, z.B. Schmieden, Strangpressen o.ä.

Auch kann eine Schweißkonstruktion vorgesehen sein, bei der an einem rohrförmigen Bügelkopf zur Verbreiterung des Stützprofils ein separater Formkörper angeschweißt ist.

Ferner kann der Bügelkopf aus einem faserverstärkten Kunststoff bestehen.

An von in der Zeichnung dargestellten Ausführungsbeispielen wird die Erfindung näher erläutert.

Es zeigen:
- Fig. 1: in einer schematischen Längsschnitt-Darstellung zwei paarig verbaute Kassetten-Überrollbügelschutzsysteme für Kraftfahrzeuge im ausgefahrenen Zustand der Überrollbügel, die jeweils einen neuartigen Bügelkopf mit aufeinander zugewandten integrierten Fortsätzen in der Bügelebene besitzen,
- Fig. 2: in einer schematischen Seitenansicht eine weitere Ausführungsform des neuartigen Bügelkopfes mit einseitig zusätzlicher bündiger Stützfläche,
- Fig. 3: in einer schematischen Seitenansicht eine dritte Ausführungsform des neuartigen Bügelkopfes mit beidseitiger zusätzlicher bündiger Stützfläche, und
- Fig. 4: in zwei Ansichten, einer Draufsicht im Figurenteil A und einem Querschnitt entlang der im Teil A dargestellten Schnittlinie im Figurenteil B sich gegenseitig verzahnt abstützende Bügelköpfe von paarweise angeordneten Überrollbügeln.

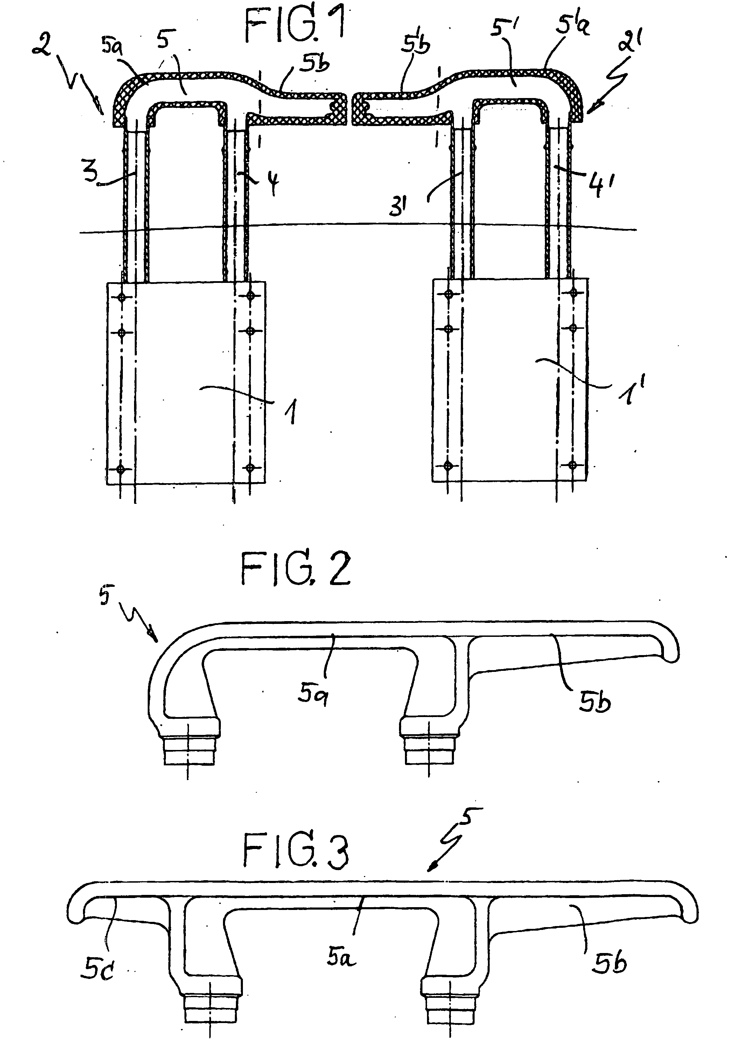

Die Fig. 1 zeigt in einer schematischen Längsschnitt-Darstellung zwei paarig in einem PKW verbaute Kassetten-Überrollbügelschutzsysteme 1, 1' im ausgefahrenen Zustand der zugehörigen Überrollbügel 2, 2'. Dabei ist jedes Überrollbügelschutzsystem einem Fahrzeugsitz zugeordnet.

Die Überrollbügel 2, 2' besitzen jeweils zwei Schenkelrohre 3, 4 und 3', 4', die in bekannter Weise in den Kassetten 1, 1' geführt sind, wie die Konstruktion der Kassetten insgesamt dem Stand der Technik entspricht, beispielsweise dokumentiert durch die eingangs zitierten Schriften.

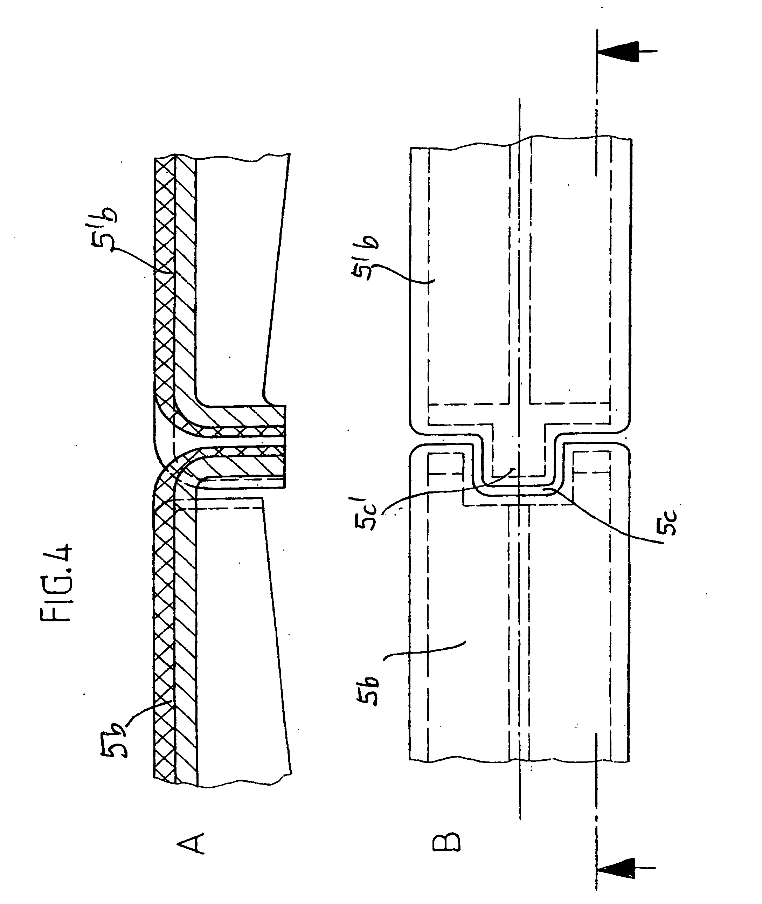

Jeder Überrollbügel 2, 2' besitzt einen neuartigen Bügelkopf 5, 5', der querjochartig die Schenkelrohre 3, 4 bzw. 3', 4' miteinander verbindet, vorzugsweise mit ihnen verschweißt ist. Die Bügelköpfe geben eine Stützfläche vor, über die sich der PKW bei einem Überschlag abrollt. Jeder Bügelkopf 5, 5' weist einen Profilformkörper 5 a, 5' a auf, der die Schenkelrohre 3, 4 bzw. 3', 4' jochartig miteinander verbindet. Dieser Profilkörper kann beispielsweise im Fall der Fig. 1 ein rohrförmiger Teil-Körper sein, an dem an der gestrichelt eingezeichneten Schnittstelle ein langhornartiger Fortsatz 5 b, 5' b in Form eines Schmiedeteiles angeschweißt ist. Die Stirnseiten der aufeinander zu gerichteten Fortsätze 5 b, 5 stehen sehr dicht nebeneinander, d.h. der Zwischenraum zwischen den Stirnseiten ist sehr schmal. Auf diese Weise können sich die Bügelköpfe beim Einwirken seitlicher Kräfte gegenseitig abstützen. Die Abstützwirkung der Überrollsysteme läßt sich dadurch weiter erhöhen, abgesehen von der Vergrößerung der Abstützfläche durch den zusätzlichen hornartigen Fortsatz. Besondere Vorteile werden dabei mit einer Ausführungsform nach Fig. 4 erreicht, bei der die Stirnseiten der Bügelköpfe benachbarter Überrollbügel miteinander verzahnt sind. Dadurch können auch Längskräfte auf beide Überrollbügelsysteme verteilt werden. Im dargestellten Ausführungsbeispiel erfolgt die Verzahnung nach dem Nut-Feder-Prinzip, mit einer Nut 5 c im Fortsatz 5 b und einer Feder 5 c im Fortsatz 5 b. Es können auch andere Verzahnungskonturen verwendet werden, beispielsweise versetzte Zahnreihen. Die Figuren 2 und 3 zeigen andere Ausführungsformen des erfindungsgemäßen Bügelkopfes 5. Im Fall der Ausführung nach Fig. 2 ist ein Fortsatz 5 b bündig mit der Stützfläche des die Schenkelrohre verbindenden Profilformkörpers 5 a vorgesehen. Profilformkörper 5 a und Fortsatz 5 b sind dabei einstückig miteinander verbunden, indem der Bügelkopf 5 vorzugsweise als Schmiede- oder Strangpreßteil ausgebildet ist.

Die Ausführungsform nach Fig. 3 ist eine Abwandlung derjenigen nach Fig. 2, bei der zusätzlich an der anderen Seite des Profilformkörpers 5 a ein weiterer Fortsatz 5 c einstückig angeformt ist.

Beide Ausführungsformen bieten ein breiteres Stützprofil als bei herkömmlichen Überrollschutzsystemen, wo nur die Stützfläche des Profilformkörpers 5 a zur Verfügung steht. Dadurch wird der Vorteil erreicht, daß sich ein Teil der bei einem Überschlag auf das System einwirkenden Kräfte auf eine größere Fläche verteilt, wodurch die Abstützwirkung des Systems erhöht und damit der Insassenschutz verbessert wird.

## Patentansprüche

1. Überrollschutzsystem für Kraftfahrzeuge, mit einem Überrollbügel (2), der in einer fahrzeugfesten Führungseinheit geführt aufgenommen ist, und der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine obere, schützende verriegelte Stellung bringbar ist, und der aus zwei Schenkelrohren (3,4) besteht, die am oberen Ende über einen Formkörper (5 a) jochartig miteinander verbunden sind, der eine Stützfläche vorgibt, über die das Kraftfahrzeug im Überschlagsfall abrollt, **dadurch gekennzeichnet, daß** der Überrollbügel (2) einen Bügelkopf (5) aufweist, welcher zusätzlich zu der, vom die Schenkelrohre (3, 4) jochartig verbindenden Formkörper (5 a) vorgegebenen Stützfläche eine weitere Stützfläche aufweist, die durch mindestens einen den Bügelkopf über die durch den Formkörper (5a) gebildete Stützfläche hinaus verbreiternden, sich in der Bügelebene erstreckenden integralen Fortsatz (5 b, 5 c) an dem die Schenketrohre (3, 4) jochartig verbindenden Formkörper (5 a) in der Bügelebene gebildet ist.

2. Überrollschutzsystem nach Anspruch 1, **dadurch gekennzeichnet, daß** der integrale Fortsatz (5 b) homartig, bündig mit dem Profil des die Schenkelrohre jochartig verbindenden Formkörpers, ausgebildet ist.

3. Überrollschutzsystem nach Anspruch 1 oder 2, **dadurch gekennzeichnet, daß** der integrale Fortsatz (5 b) sich zum Fahrzeuginneren hin erstreckt.

4. Überrollschutzsystem nach Anspruch 3, mit Überrollbügel, die paarweise zwei seitlich benachbarten Fahrzeugsitzen zugeordnet sind, **dadurch gekennzeichnet, daß** der integrale Fortsatz (5 b) jeweils eine derartige Länge aufweist, daß sich zwischen seiner Stirnseite und der des Fortsatzes des Bügelkopfes des seitlich benachbarten Fahrzeugsitzes nur ein sehr schmaler Zwischenraum im Vergleich zur Breite des Bügelkopfes ergibt.

5. Überrollschutzsystem nach einem der Ansprüche 1 bis 3, mit Überrollbügel, die paarweise zwei seitlich benachbarten Fahrzeugseiten zugeordnet sind, **dadurch gekennzeichnet, daß** die beiden integralen Fortsätze (5 b, 5'b) an ihren zur Fahrzeugmitte weisenden Stirnflächen zueinander komplementäre Ausformungen (5 c, 5'c) für eine gegenseitige Verzahnung bilden.

6. Überrollschutzsystem nach einem der Ansprüche 1 bis 5, **dadurch gekennzeichnet, daß** der Bügelkopf (5) bestehend aus dem jochartigen Formkörper (5 a) und dem integralen Fortsatz (5 b, c) ein einstückiges Schmiedeteil ist.

7. Überrollschutzsystem nach einem der Ansprüche 1 bis 5, **dadurch gekennzeichnet, daß** der Bügelkopf (5) bestehend aus dem jochartigen Formkörper (5 a) und dem integralen Fortsatz (5 b, c) ein einstückiges Strangpressteil ist

8. Überrollschutzsystem nach einem der Ansprüche 1 bis 5, **dadurch gekennzeichnet, daß** an einem rohrförmigen, die Schenkelrohre jochartig verbindenden Formkörper zur Verbreiterung des Stützprofils ein separater Formkörper angeschweißt ist.

9. Überrollschutzsystem nach einem der Ansprüche 1 bis 5, **dadurch gekennzeichnet, daß** der Bügelkopf mit jochartigem Formkörper und integralem Fortsatz aus einem faserverstärkten Kunststoff besteht.

## Claims

1. A roll-over protection system for motor vehicles, having a roll bar (2) which is received and guided in a guide unit fixed to the vehicle and which, in the normal state, can be held by a retaining device in a lower, retracted, resting position against the force of at least one preloaded driving pressure spring and, upon release of the retaining device, can be brought by the spring force of the driving pressure spring into an upper, protecting, locked position, and which consists of two leg pipes (3, 4) connected to each other in the manner of a yoke at their upper end by a shaped body (5a) which provides a support surface over which the motor vehicle rolls in the event of a rollover, **characterised in that** the roll bar (2) has a bar head (5) which has, in addition to the support surface provided by the shaped body (5a) which connects the leg pipes (3, 4) in the manner of a yoke, a further support surface which is formed in the plane of the roll bar by at least one integral extension (5b, 5c) on the shaped body (5a) connecting the leg pipes (3, 4) in the manner of a yoke, which extension (5b, 5c) widens the head of the roll bar beyond the support surface formed by the shaped body (5a) and extends in the plane of the roll bar.

2. A rollover protection system according to claim 1, **characterised in that** the integral extension (5b) is formed like a horn and flush with the side face of the shaped body connecting the leg pipes in the manner of a yoke.

3. A rollover protection system according to claim 1 or claim 2, **characterised in that** the integral extension (5b) extends towards the inside of the vehicle.

4. A rollover protection system according to claim 3, having roll bars assigned in pairs to two laterally adjacent seats of a vehicle, **characterised in that** the integral extension (5b) is in each case of a length such that only a very narrow gap, in comparison with the width of the roll bar head, is formed between its end face and that of the extension of the roll bar head of the laterally adjacent seat of the vehicle.

5. A rollover protection system according to any one of claims 1 to 3, having roll bars assigned in pairs to two laterally adjacent seats of a vehicle, **characterised in that** the two integral extensions (5b, 5'b) provide at their end surfaces pointing towards the middle of the vehicle mutually complementary formations (5c, 5'c) for interlocking.

6. A rollover protection system according to any one of claims 1 to 5, **characterised in that** the roll bar head (5) consisting of the yoke-like, shaped body (5a) and the integral extension (5b, c) is a one-piece forging.

7. A rollover protection system according to any one of claims 1 to 5, **characterised in that** the roll bar head (5) consisting of the yoke-like, shaped body (5a) and the integral extension (5b, c) is a one-piece extrusion moulding.

8. A rollover protection system according to any one of claims 1 to 5, **characterised in that**, in order to widen the support profile, a separate shaped body is welded to a tubular, shaped body that connects the leg pipes in the manner of a yoke.

9. A rollover protection system according to any one of claims 1 to 5, **characterised in that** the roll bar head with the yoke-like, shaped body and the integral extension consists of a fibre-reinforced plastics material.

## Revendications

1. Système de protection contre les tonneaux pour des véhicules, avec un arceau de sécurité (2), qui doit être placé dans une unité de guidage fixée au véhicule, et qui, dans un état normal, résiste à la force d'au moins un ressort de pression de commande précontraint par un dispositif de retenue dans une position de repos inférieure rentrée, et peut être amené dans une position verrouillée supérieure de protection, lorsque le dispositif de retenue est relâché, par la tension du ressort de pression de commande, et qui se compose de deux tubes coudés (3, 4), qui sont reliés l'un à l'autre sous forme de travée au niveau de l'extrémité supérieure via un corps moulé (5a), qui présente une surface de soutien sur laquelle le véhicule roule en cas de tonneau, **caractérisé en ce que** l'arceau de sécurité (2) comporte une tête d'arceau (5) qui, outre la surface de soutien définie par le corps moulé (5a) reliant sous forme de travée les tubes coudés (3, 4), comporte une autre surface de soutien, qui est formée par au moins un prolongement (5b, 5c) intégral s'étendant au niveau de l'arceau et élargissant la tête d'arceau sur la surface de soutien formée par le corps moulé (5a) au niveau du corps moulé (5a) reliant sous forme de travée les tubes coudés (3, 4).

2. Système de protection contre les tonneaux selon la revendication 1, **caractérisé en ce que** le prolongement intégral (5b) est conçu sous forme de corne et à la surface du profil du corps moulé reliant sous forme de travée les tubes coudés.

3. Système de protection contre les tonneaux selon la revendication 1 ou 2, **caractérisé en ce que** le prolongement intégral (5b) s'étend jusqu'à l'intérieur du véhicule.

4. Système de protection contre les tonneaux selon la revendication 3, avec des arceaux de sécurité qui sont affectés par paire à deux sièges voisins latéraux, **caractérisé en ce que** le prolongement intégral (5b) comporte respectivement une longueur, de sorte que, entre sa face avant et celle du prolongement de la tête d'arceau du siège voisin latéral, il n'existe qu'un intervalle très restreint comparé à la largeur de la tête d'arceau.

5. Système de protection contre les tonneaux selon l'une quelconque des revendications 1 à 3, avec des arceaux de sécurité qui sont affectés par paire à deux côtés du véhicule voisins latéraux, **caractérisé en ce que** les deux prolongements intégraux (5b, 5'b) forment des arrangements complémentaires les uns par rapport aux autres (5c, 5'c) au niveau des surfaces avant présentes au centre du véhicule pour un engrenage mutuel.

6. Système de protection contre les tonneaux selon l'une quelconque des revendications 1 à 5, **caractérisé en ce que** la tête d'arceau (5) composée d'un corps de moule (5a) sous forme de travée et d'un prolongement intégral (5b, c) est un élément forgé d'un seul bloc.

7. Système de protection contre les tonneaux selon l'une quelconque des revendications 1 à 5, **caractérisé en ce que** la tête d'arceau (5) composée d'un corps de moule (5a) sous forme de travée et d'un prolongement intégral (5b, c) est un élément extrudé d'un seul bloc.

8. Système de protection contre les tonneaux selon l'une quelconque des revendications 1 à 5, **caractérisé en ce qu'**un corps moulé de séparation est soudé au niveau d'un corps moulé en forme de tube reliant sous forme de travée les tubes coudés pour élargir le profil de soutien.

9. Système de protection contre les tonneaux selon l'une quelconque des revendications 1 à 5, **caractérisé en ce que** la tête d'arceau avec un corps moulé sous forme de travée et un prolongement intégral se compose d'une matière plastique renforcée par des fibres.
